# EUROPÄISCHE PATENTANMELDUNG

(11) **EP 2 002 745 A1**
(43) Veröffentlichungstag der Anmeldung: **17.12.2008**
(21) Anmeldenummer: 07011764.3
(22) Anmeldetag: 15.06.2007
(51) Int. Cl.: A45C 3/04, G09F 21/02, A45C 15/06, G02F 1/1333

(54) **Tasche mit leuchtender Werbeträgerfläche**

(71) Anmelder: Hopp, Andreas, 10709 Berlin (DE)
(72) Erfinder: Hopp, Andreas, 10709 Berlin (DE)
(74) Vertreter: Scholz, Hartmut

(57) **Zusammenfassung**

Dreidimensionales, mit flexiblen Seitenteilen versehenes Transportbehältnis zur Aufnahme von eingekauften Gütern. Mindestens ein Seitenteil (12) des Transportbehältnisses (10) mit Leuchtmitteln (16) versehen, die eine Botschaft Blickfang verstärkend generieren.

## Beschreibung

Die vorliegende Erfindung betrifft ein dreidimensionales, mit flexiblen Seitenteilen versehenes Transportbehältnis zur Aufnahme von Gütern.

Solche Transportbehältnisse, nämlich Tragetaschen, Einkaufsbeutel, Verpackungs- und Transportkartons usw. sind allgemein bekannt. Bekannt sind auch Prägungen der verpackungsoberfläche und die Verwendung von teuren Materialien, hochwertiger Kartonage, Verbundwerkstoffen und dgl., um die Qualitätsvermutung des verpackten Inhalts zu erhöhen.

Die Seitenteile solcher Transportbehältnisse sind sehr häufig mit aufgedruckten oder sonst wie aufgebrachten Botschaft, beispielsweise eine Verbraucherinformationen, nämlich Firmenlogos, Marken, Werbesprüche, Tierkreiszeichen, Figuren, Dekorationen oder dgl., versehen, die als Blickfangwerbung für die Waren und Dienstleistungen eines Unternehmens dienen.

Solch edle und aufwändige Verpackungen werden häufig als Statussymbol angesehen, weil sie durch ihre edle Aufmachung und elegante Gestaltung auf einen ebenso eleganten und hochpreisigen Inhalt hinweisen, mit dem sich das kaufende Publikum identifizieren möchte.

Es ist Aufgabe der vorliegenden Erfindung, ein Transportbehältnis der eingangs beschriebenen Art zu schaffen, das durch eine Blickfang verstärkendes Mittel dazu geeignet ist, sich gegenüber anderen in erheblichem Maße abzuheben.

Diese Aufgabe wird durch die in dem Patentanspruch 1 angegebenen Merkmale gelöst. Vorteilhafte Ausführungsformen der Erfindung sind Gegenstand der Unteransprüche.

Insbesondere wird diese Aufgabe erfindungsgemäß dadurch gelöst, dass mindestens ein Seitenteil mit Leuchtmitteln versehen ist, die ein Blickfang verstärkendes Mittel generieren.

Das Transportbehältnis, beispielsweise eine Einkaufstragetasche oder ein Verpackungskarton, besteht aus einem Hohlkörper, der zur Aufnahme von Waren und Gütern geeignet ist. Die Seitenteile weisen ein oder mehrere Druck- oder Werbeträgerflächen auf, denen ein oder mehrere Leuchtmittel zugeordnet sind. Das erfindungsgemäße Transportbehältnis kann mit diesen Leuchtmitteln die Aufmerksamkeit auf sich lenken und hebt sich so von der Masse von anders ausgestalteten Verpackungen ab.

In einer bevorzugten Ausführung ist das Transportbehältnis als eine Einkaufstragetasche, ein Verpackungskarton oder der gleichen, beispielsweise aus einem starken Papier, kaschiertem Kunststoff oder Karton und frei tragbar ausgebildet. Solche Tragetaschen oder Einkaufskartons sind besonders geeignet, Botschaften an Endverbraucher weiterzugeben.

Gemäß einer weiteren bevorzugten Ausführungsform des erfindungsgemäßen Behältnisses sind die Leuchtmittel in eine werbeträgerfläche eingelassen und mit dieser fest verbunden. Durch die Maßnahmen wird eine glatte Oberfläche geschaffen, und die Leuchtmittel sind vor Beschädigungen geschützt. Die Werbeträgerfläche des Behältnisses kann im Bereich des Leuchtmittels zusätzlich mit einer transparenten Abdeckung versehen sein, die die wirkung des Leuchtmittels verstärkt.

Bei einer vorteilhaften Ausführungsform sind die Leuchtmittel als LEDs (Light Emitting Diods) ausgebildet. Die LEDs können als Lichtpunkte und/oder als Lichtbänder blickfangartig auf der Oberfläche des Behältnisses ausgebildet sein. Die selbst leuchtenden LEDs machen verstärkt auf sich aufmerksam und weisen deutlich wahrnehmbar auf den Hersteller oder Händler der mit dem Behältnis verpackten Waren hin.

Um auch komplexe Behältnisse zu erzeugen, ist es bei einer weiteren bevorzugten Ausführungsform vorgesehen, die Oberfläche als einen flexiblen Flüssigkeitskristallbildschirm (Display) auszubilden.

In einer besonders bevorzugten Ausführungsform ist dem erfindungsgemäßen Behältnis eine Energiezufuhr zugeordnet, die das Leuchtmittel mit Energie versorgt. Als Energieversorgung kann hier beispielsweise eine Einwegbatterie dienen, ebenso aber auch ein wieder verwendbarer Akkumulator, der in dem Behältnis an geeigneter Stelle austauschbar angeordnet ist. Es sind beispielsweise auch elektrovoltaische Systeme vorgesehen, die dem Behältnis zugeordnet sind. Solche Systeme können tagsüber das Tageslicht beziehungsweise die Sonnenenergie in elektrische Energie umwandeln und in einem geeigneten Energiezwischenspeicher speichern. Bei Bedarf können sie dem Leuchtmittel elektrische Energie zur Verfügung stellen.

In einer weiteren vorteilhaften Ausführungsform des erfindungsgemäßen Behältnisses ist das Leuchtmittel als eine autolumineszierende Substanz ausgebildet. Das hat den Vorteil, dass das Leuchtmittel keine externe Energiezufuhr benötigt.

Gemäß einer weiteren bevorzugten Ausführungsform des erfindungsgemäßen Behältnisses ist das Leuchtmittel eine phosphorisierende Substanz. Durch die phosphorisierende Substanz lassen sich besonders kostengünstig und schnell lumineszierende Botschaften auf der Oberfläche des Transportbehältnisses anbringen.

In einer weiteren besonders bevorzugten Ausführungsform ist dem erfindungsgemäßen Behältnis ein Tragemittel zugeordnet. Das Tragemittel kann als ein Handgriff, eine Schlaufe, ein Schulterriemen oder dgl. ausgebildet sein.

Um die Leuchtmittel ein- und ausschalten zu können, ist in einer weiteren besonders bevorzugten Ausführungsform des erfindungsgemäßen Behältnisses ein integriertes Schaltmittel vorgesehen. Sobald das Behältnis ein Verwender die Tragemittel zum Zwecke des Transportes umfasst, wird durch das Eigengewicht des zu transportierenden Gutes automatisch ein Schaltmittel betätigt. Das Schaltmittel schließt den Stromkreis zwischen dem Leuchtmittel und der Energieversorgung. Hierdurch wird sichergestellt, dass die Blickfang verstärkenden Leuchtmittel nicht ungewollt eingeschaltet werden. Die Energieressourcen und der Stromversorgung werden dadurch geschont.

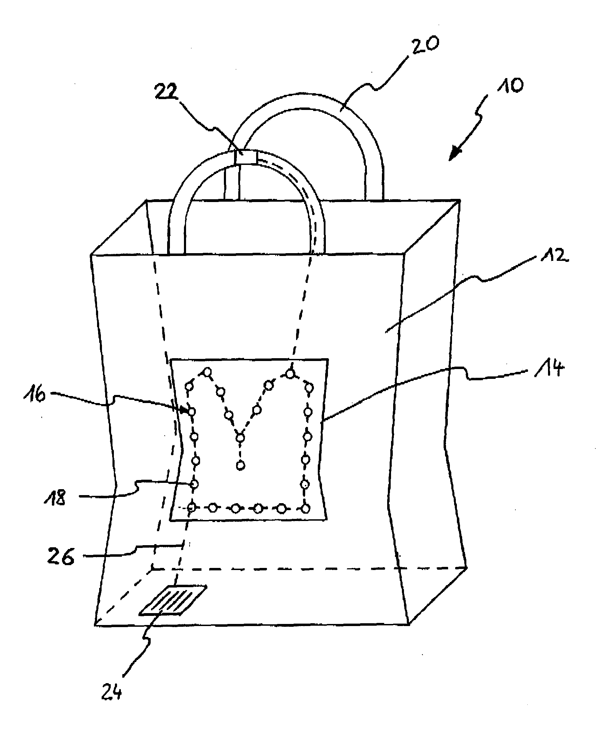

Die Erfindung ist in der beigefügten Zeichnung anhand einer beispielhaften Ausführungsform dargestellt und wird nachfolgend näher erläutert.

Die einzige Figur ist eine isometrische Darstellung eines erfindungsgemäßen Transportbehältnisses mit Blickfang verstärkenden Leuchtmitteln auf mindestens einer seiner Seitenteile.

Das beispielhaft dargestellte erfindungsgemäße Transportbehältnis 10 besteht aus mehreren Seitenteilen 12 und ist hier nur beispielhaft als eine Einkaufstragetasche ausgebildet. Es weist eine Werbeträgerfläche 14 auf, auf mit Leuchtmitteln 16 eine bestimmte Botschaft 18 Blickfang verstärkend generiert werden kann.

Das Transportbehältnis 10 kann auf seinen Seitenteilen 12 eine Werbebotschaft 18 enthalten. Die Werbebotschaft 18 ist als Blickfang mit Leuchtmitteln 16 versehen. Die Leuchtmittel 16 sind in die einen bestimmten Bereich des Seitenteils 12 darstellende Werbeträgerfläche 14 integriert.

Die Leuchtmittel 16 können auf der Außenoberfläche des Seitenteils 12, in dessen Außenoberfläche oder von hinten durchscheinend hinter der Außenoberfläche angeordnet sein.

Die Leuchtmittel 16 sind als sog. LEDs (Light Emitting Diods) ausgebildet, die in einer Vielzahl von Formen und Farben zusammengestellt werden können.

Dem Transportbehältnis 10 ist ein Tragemittel 20 in Form eines Handgriffs, einer Schlaufe, eines Schulterriemen oder dgl. zugeordnet. In dem Tragemittel 20 ist ein Schaltmittel 22 vorgesehen, mit dem die Leuchtmittel 16 ein- und ausgeschaltet werden können.

Die Leuchtmittel 16 sind mit einer Energieversorgung 24 über eine elektrische Leitung 26 mit dem Schaltmittel 22 verbunden. In der vorliegenden Ausführungsform ist die Energieversorgung 24 an dem Boden des Transportbehältnisses 10 angeordnet.

Als Energieversorgung 24 ist eine Einwegbatterie vorgesehen, allerdings sind auch wieder aufladbare Akkumulatoren und dgl. denkbar. Die Energieversorgung 24 ist beispielsweise in einen nicht dargestellten Zwischenboden des Transportbehältnisses 10 eingelegt.

### Bezugszeichen

- 10: Transportbehältnis
- 12: Seitenteil
- 14: Werbeträgerfläche
- 16: Leuchtmittel
- 18: Botschaft
- 20: Tragemittel
- 22: Schaltmittel
- 24: Energieversorgung
- 26: elektrische Leitung

## Patentansprüche

1. Dreidimensionales, mit flexiblen Seitenteilen versehenes Transportbehältnis zur Aufnahme von Gütern, **dadurch gekennzeichnet, dass** mindestens ein Seitenteil (12) mit Leuchtmitteln (16) versehen ist, die eine Blickfang verstärkte Botschaft (18) generieren.

2. Transportbehältnis nach Anspruch 1, **dadurch gekennzeichnet, dass** einem der Seitenteile (12) eine mit Leuchtmitteln (16) versehene Werbeträgerfläche (14) zur Generierung einer Botschaft (18) zugeordnet ist.

3. Transportbehältnis nach Anspruch 1 oder 2, **dadurch gekennzeichnet, dass** die Leuchtmittel (16) LEDs (Light Emitting Diods) sind.

4. Transportbehältnis nach Anspruch 1 oder 2, **dadurch gekennzeichnet, dass** die Leuchtmittel (16) aus einer autolumineszierenden Substanz bestehen.

5. Transportbehältnis nach Anspruch 1 oder 2, **dadurch gekennzeichnet, dass** die Leuchtmittel (16) aus einer phosphorisierenden Substanz bestehen.

6. Transportbehältnis nach Anspruch 1 oder 2, **dadurch gekennzeichnet, dass** mindestens eines der Seitenteile (12) ein flexibles Flüssigkristalldisplay ist.

7. Transportbehältnis nach einem der vorangehenden Ansprüche, **dadurch gekennzeichnet, dass** die Leuchtmittel (16) mit einer Energieversorgung (24) verbunden sind.

8. Transportbehältnis nach einem der vorangehenden Ansprüche, **dadurch gekennzeichnet, dass** das Transportbehältnis (10) mit Tragemitteln (20) versehen ist und den Tragemitteln (20) Schaltmittel (22) zum zu- und abschalten einer Energieversorgung (24) zugeordnet sind.

9. Transportbehältnis nach einem der vorangehenden Ansprüche, **dadurch gekennzeichnet, dass** die Schaltmittel (22) über eine elektrische Leitung (26) in einem Stromkreis mit den Leuchtmitteln (16) und der Energieversorgung (24) verbunden ist.

10. Transportbehältnis nach einem der vorangehenden Ansprüche, **dadurch gekennzeichnet, dass** der Stromkreis zwischen den Leuchtmitteln (16) und der Energieversorgung (24) mit dem Schaltmittel (22) aktivierbar ist, sobald das Transportbehältnis (10) geschlossen und in seine Gebrauchsposition gebracht ist.
